(19) Europäisches Patentamt

European Patent Office

Office européen des brevets

(11) Publication number: **0 049 608**
**B1**

(12) **EUROPEAN PATENT SPECIFICATION**

(45) Date of publication of patent specification: **29.01.86**

(21) Application number: **81304548.1**

(22) Date of filing: **01.10.81**

(51) Int. Cl.⁴: **A 01 G 9/26, H 01 F 27/38**

(54) **Method of heating.**

(30) Priority: **03.10.80 GB 8032040**
**06.10.80 GB 8032160**
**13.10.80 GB 8032980**

(43) Date of publication of application:
**14.04.82 Bulletin 82/15**

(45) Publication of the grant of the patent:
**29.01.86 Bulletin 86/05**

(84) Designated Contracting States:
**AT BE CH DE FR IT LI LU NL SE**

(56) References cited:
**DE-A-1 440 374**
**DE-A-2 225 720**
**DE-C- 592 243**
**DE-C- 846 429**
**FR-A-1 168 584**
**FR-E- 78 851**
**GB-A- 625 402**
**US-A-4 020 440**

(73) Proprietor: **Charlton Thermosystems (Romsey) Limited**
**Bastion House 140 London Wall**
**London EC2Y 5DN (GB)**

(72) Inventor: **Charlton, John Sidney**
**Treetops, Ower, Romsey**
**Hampshire S05 0AE (GB)**

(74) Representative: **Mayes, Stuart David et al**
**BOULT, WADE & TENNANT 27 Furnival Street**
**London, EC4A 1PQ (GB)**

## Description

The present invention relates to a method of heating and particularly for heating a large mass of material, e.g. of several cubic feet.

It is known to heat such material electrically. For example, it is known to heat soil for horticultural purposes, for example, in greenhouses, by embedding in the soil or in a base layer under the soil lengths of insulated electric wire and then to heat the soil by running an electric current in the wire. Commonly, such insulated wire, is provided in standard lengths for connection directly to mains voltage at, for example, 250 V AC. Clearly, with such an arrangement it is important that the wire remains well insulated to avoid the possibility of electric shocks and earth fault currents. However, with such insulated wire, the cross-section of the wire is relatively small and therefore in order to provide sufficient heat to raise the temperature of the bulk of the soil as required, the wire itself must be raised to a significantly higher temperature to produce the required temperature gradient across the insulation of the wire and in the immediately surrounding layers of soil. The production of a temperature gradient in the soil is undesirable since in order to obtain uniform plant growth the soil should be at a substantially uniform temperature.

Starting from DE—C—846 429 as prior art, the present invention provides a method of heating a non-gaseous material which comprises the steps of embedding or immersing in the material at least one length of a bare electrical conductor and driving an electric current in the conductor by connecting the conductor to the secondary of an A.C. transformer having primary and secondary windings characterised in that the A.C. transformer has its windings arranged such that the primary and secondary windings are spooled separately and coaxially on a single core, and spaced axially from one another.

The voltage of the conductor is kept at a relatively low and safe level by means of the transformer design and as the conductor embedded or immersed in the material has no electrically insulating coating this eliminates any temperature gradient between the outer surface of the conductor material and the material in contact therewith. Heat can flow directly from the conducting material into the surrounding material. To provide sufficient heat dissipation with such a low voltage drop along the conductor, the resistance per unit length of the conductor is also relatively low.

The conductor may be elongate with a cross-sectional area of at least 1 cm² and preferably at least 5 cm². Such a relatively large cross-section conductor can have the desired low resistance and has the added advantage of providing a relatively large surface area per unit length in contact with the surrounding material to be heated. Thus, heat dissipated in the conductor can readily flow into the material to be heated.

In a preferred example, the conductor is steel rope, typically having a diameter of 2 cm or more.

It is desirable for the conductor to have a surface area per unit length greater than $2\sqrt{A\pi}$, where A is the cross-sectional area.

The voltage across the conductor may be less than 50 V, preferably less than 20 V.

It will be appreciated that if the material in which the conductor is embedded is not electrically insulating, then currents will tend to flow from the conductor in the material itself. It may be desirable to arrange the resistance of the conductor to be such that such currents flow from the conductor through the material. For example, the above described heating method may be used in the cultivation of plants for the heating of the growing medium of the plants in which case the length of conductor is embedded in the growing medium or in a base material for the growing medium. Then, leakage currents flowing from the conductor through the growing medium can, it is thought, have a beneficial effect on the growth performance of the plant. It is believed that such small electrical currents flowing in the growing medium may help to break down nutrients in the medium or improve the absorption of such nutrients by the plant roots.

The heating method of the present invention may also be employed for space heating for a building or vessel, in which case the conductor may be embedded in a flooring or wall material of the building or vessel.

Furthermore, the present invention envisages a method of curing concrete comprising heating the wet concrete by the method described above, wherein the conductor is embedded in the concrete to be cured.

The present invention still further envisages a method of sterilising soil or other solid material, comprising heating the material by the method described above.

Other applications of the heating method of the invention include grain and green crop drying, de-icing railway tracks, road and runway surfaces and sports grounds.

In these heating methods the transformer secondary can be connected directly to existing metal industrial hardware such as storage tanks, oil rigs, oil pipelines, car bodies and so on.

A separate rope or appropriate metal conductor may be placed over or under the first wire rope or other elongate metal conductor, the conductor having closed ends to induce a flow of energy (magnetism, heat etc.). This creates an energy flow in the closed circuit resulting in heavy magnetic influences together with heat etc. in the second circuit. A vibratory effect is also present in both.

It has been found from tests that a large magnetic field together with a vibratory influence coupled with heat causes rapid growth in plants when the conductor is placed in the or around the plant growing medium.

The step down transformer preferably has a window shaped laminated core, and a primary winding and a secondary winding on each of the opposed arms of the core. The secondary windings are preferably each double wound with one copper and one aluminium wire.

The secondary windings may be connected in parallel.

In a preferred embodiment, the secondary winding of the transformer is connected in series with a mild steel rod enclosing a brass slug at a selected position along the length of the rod to reduce the cross-section of steel in the rod at the location of the slug without substantially effecting the electrical resistance. Then, means may be provided for generating a magnetic field transversely of the axis of the rod. This magnetic field is preferably d.c.

The invention further provides a method of heating liquid in which the conductor is an elongate tubular member, and passing the liquid through the member to be heated thereby.

The fluid may be water.

The member may be a steel pipe having an equivalent mass/temperature characteristic to the steel cable described above or hereinafter. The member is preferably positioned in a heat insulating medium.

In tests using cold water at 40°F (approx. 4°C) and 80 ft. (approx. 24.4 m) of heavy walled water pipe initially empty with the transformer unit connected and set on medium range, the consumption was 12 A at 230 V. After three minutes, 6 gallons (approx. 27 litres) of water was passed through pipe at 10 psi (approx. 69 kN/m²) and heated in 3 1/2 minutes to 212°F (100°C).

If water was introduced before switching on the transformer unit, it took 17 minutes to produce the same quantity of water at the same temperature. It is concluded that water can be heated more cheaply if the pipe is initially empty.

In another test, an 80 ft. (approx. 24. 4 m) length of 1'' (25.4 mm) diameter galvanised pipe having a capacity of 3.2 gallons (approx. 15 litres) was used, across the ends of which the alternative transformer described below was connected. The complete run of the pipe was insulated by covering of aluminium backed fibre glass. 1—2 kW hours were used over 15 minutes, while the water temperature was found to rise by 98°F (approx. 37°C), an efficiency of 76.6%. In a comparison test with a conventional immersion heater of equivalent power and the same volume of water, the same amount of power being consumed, the water temperature rise was only 68°F (20°C) giving an efficiency of 53%. Thus the apparatus of the invention provided 45% improvement in efficiency.

Examples of the present invention will now be described with reference to the accompanying drawings, in which:

Fig. 1 is a plan view, partially schematic, of an installation for heating a body of material in accordance with an example of the method of this invention.

Figure 2 is a cross-sectional view illustrating the bare electrical conductors employed in the method of Figure 1 buried in a body of soil;

Figure 3 is a plan view of a special form of transformer for use in driving current in a conductor;

Figure 4 is a view in elevation from one side of the transformer of Figure 3;

Figure 5 is a schematic electrical diagram of the transformer of Figures 3 and 4;

Figure 6 is a detailed view in cross-section of part of the transformer of Figures 3 and 4;

Figure 7 is a schematic electrical diagram of an alternative transformer, and

Figure 8 is a cross-sectional view of a preferred form of steel rope for use in heating according to the invention.

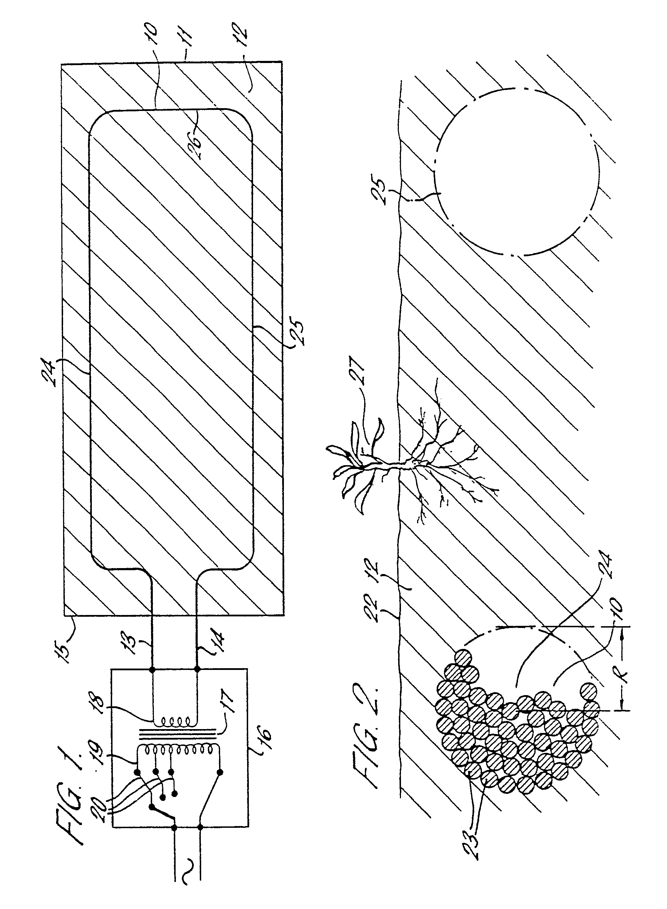

In Figure 1, a loop of steel rope 10 is shown buried in a bed 11 of sand 12 with a soil covering. The rope 10 is buried at a depth of about 15 cm and extends around fairly close to the edges of the bed 11. The ends 13 and 14 of the loop of rope 10 emerge from the surface of the sand and soil 12 at one end 15 of the bed and are connected electrically to a source 16 of electric current. In the present example, the source 16 comprises a step down transformer 17 of a special form, having a secondary winding 18 connected in series with the loop of rope 10. A primary winding 19 is connected via one of a plurality of taps 20 to a source of alternating current, for example, mains voltage at 240 volts. The steel rope is typically between 2 cm and 3 cm in diameter and may comprise surplus or discarded rope hawsers. The rope 10 is, in this example, left completely uninsulated electrically, that is to say bare, when buried in the sand 12. The loop of rope 10 may have a total length of 10 m or more. The step down transformer 16 may have a turns ratio of, say, 27.5:1 when on the outer tap 20 as illustrated in Figure 1. This provides a nominal voltage on the secondary winding of about 8.7 V. This voltage typically produces a current of about 63 A in the secondary winding implying an impedance in the secondary circuit of about .14 ohms. With such an arrangement the power consumption is about 550 W.

The other taps 20 on the primary winding 19 of the transformer 16 may provide turns ratios of 20:1 and 14.6:1, providing secondary voltages of 12 V and 16.5 V respectively, and corresponding secondary currents of 85 and 120 A and power dissipations of 1 and 2 kW.

An arrangement as described above has been found to heat a body of soil with a sand base approximately 5 m by 1 1/4 m and 15 cm deep to a temperature in excess of 70°F (approx. 21°C) in a greenhouse throughout the winter months. By using a steel rope of a diameter of between 2 and 3 cm, the surface area of the rope in contact with the soil is relatively large and as a result there is a very small temperature gradient between the rope and the surrounding sand or soil in which the rope is buried. Thus, the heat delivered by the rope to the body of soil is relatively evenly distributed through the body and there is no need to heat the rope excessively to ensure that regions in the body of soil spaced away from the rope are heated to a sufficient temperature.

Furthermore, because the rope 10 is bare, some current flows from the rope through the sand and soil itself, providing direct ohmic heating of the sand and soil.

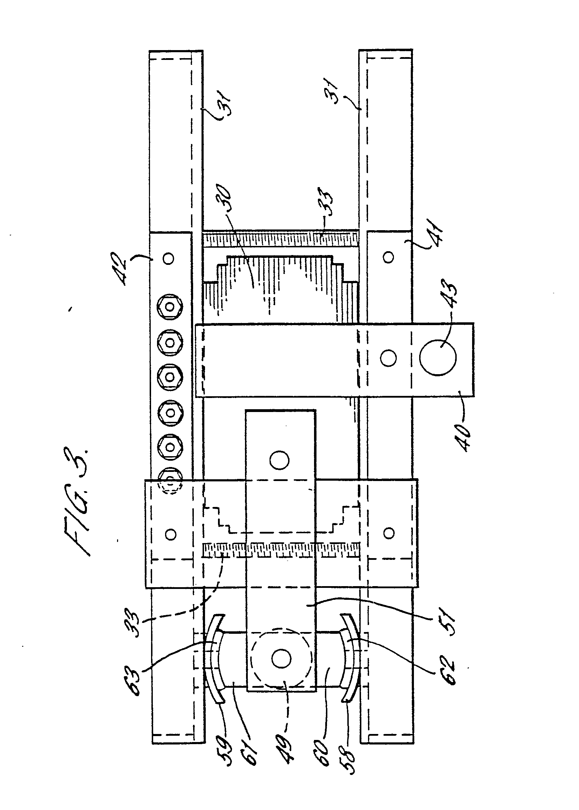

Referring to Figure 2, this provides a cross-sectional view of one leg of the rope 10 buried beneath the surface 22 of the sand and soil 12. The depth of the sand and soil 12 is not shown to scale relative to the radius of the rope 10. As illustrated in Figure 2, the rope 10 is a rope form wire hawser or cable having separate bundles 23 of wires wound about each other, so that the outer surface of the rope 10 is uneven providing a surface area for the rope significantly greater than that of a smooth cylindrical surfaced conductor. As a result, the surface area of the rope in contact with the surrounding soil is considerably increased and this, too, aids in reducing any temperature gradient between the rope and the surrounding soil.

It will be apparent that a potential difference is established between the arms 24 and 25 of the loop of rope 10. This potential difference decreases towards the end 26 of the loop remote from the transformer 16. However, when the rope 10 is buried in a medium which is not electrically insulating, the potential difference will be sufficient to cause current to flow between the two arms 24 and 25 of the loop directly through the body of material, for example, soil, in which the loop is buried.

Referring again to Figure 2, electric current will flow from one arm 24 of the rope 10 through the soil towards the other arm 25, shown dotted in the figure. Since the driving voltage from the transformer 16 is an alternating voltage, the current flowing in the soil is an alternating current. It is thought that such currents flowing in the soil may have a substantial effect on the growth performance of plants, such as plant 27, growing in the soil 12. It is thought that the electric currents may assist in the release of nutrients from the soil, for example, by electrolytic action, so that these nutrients can more readily be absorbed by the plant 27.

It will be appreciated that the tap 20 of the primary winding 19 of the transformer 16 which is selected depends on the desired power output of the heating system. An external manual control may be supplied on the transformer 16 to enable the power delivered by the transformer to be altered as desired. However, it is believed that there may be a degree of automatic regulation of the power output in the system. It is believed that this may be due to variations in the magnetic permeability of the steel of the steel rope 10 with temperature. It will be appreciated that with such steel rope of relatively large diameter, the permeability of the steel of the rope itself has a substantial effect on the impedance of the loop of rope 10. Thus, as the temperature of the rope, and of the surrounding soil, rises, the impedance of the loop rises also producing a drop in the power dissipated by the loop.

It will be appreciated also that it may not be essential to provide a complete loop of the rope 10 buried in the soil. The loop shown in Figure 1 may be broken at the end 26 so that all current flowing between the arms 24 and 25 flows through the body of the soil producing ohmic heating of the soil. The separation of the arms 24 and 25 may vary as a function of the distance from the ends 13 and 14 connected to the transformer 16, so that the current density flowing in the soil between the arms 24 and 25 is substantially constant to produce a substantially even heating effect.

It will be appreciated that the method of the present invention may be employed for purposes other than soil heating for horticulture. For example, the loop of rope 10 may be embedded in a body of concrete and employed to heat the concrete to aid in curing.

In another arrangement, the loop of rope 10 may be provided embedded in the material of the floor or wall or the like of a building so as to provide in effect under floor space heating for the building. The loop 10 may also be immersed in a liquid, for example, water, and used to heat the liquid, for example, of a swimming pool.

Still further, the rope 10 may be laid just under or at a surface which is to be kept free from ice or snow. On application of the current the system can effectively melt snow and ice surrounding the rope.

In all the above examples, the rope 10 is used completely bare with no electrical insulation so as to maximise heat transfer and also obtain the benefit of direct ohmic heating of the surrounding medium.

In each of these further examples, there may be automatic regulation as mentioned above resulting from variations in the magnetic permeability of steel with temperature.

A preferred form of heating rope or hawser 10 is shown in cross-section in Figure 8. Individual wires are wound anti-clockwise to form cores 90 which are then wound clockwise to form the final cable 10. The number of wires is preferably divisible by three, as also preferably is the number of cores 90; Figure 8 shows a cable of six cores each of 24 wires.

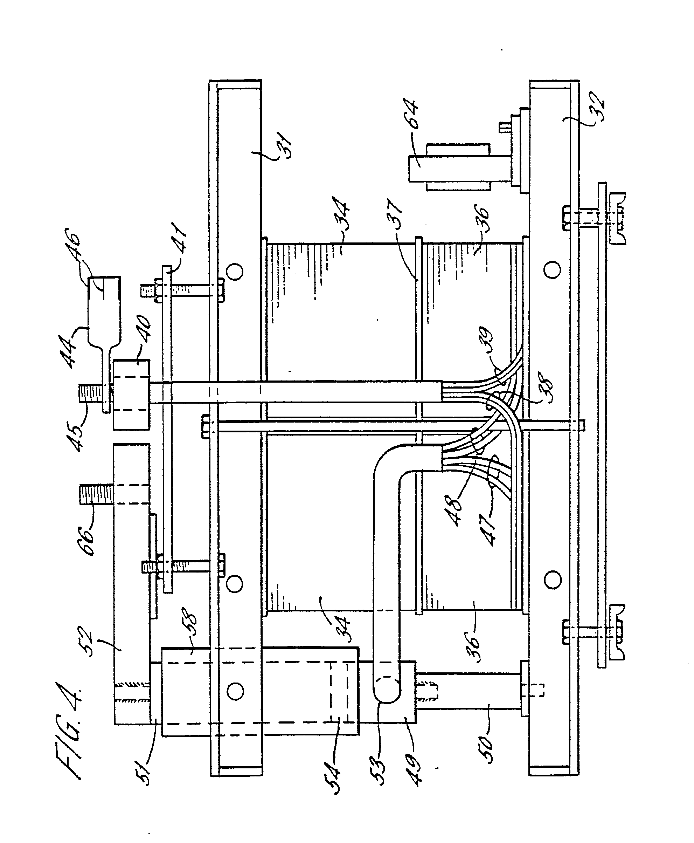

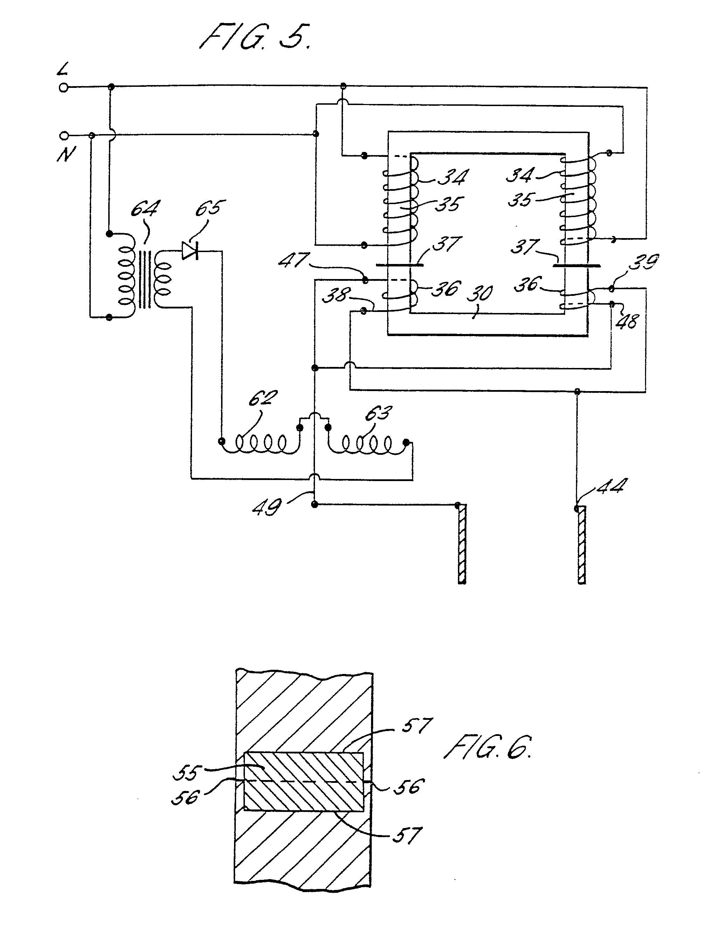

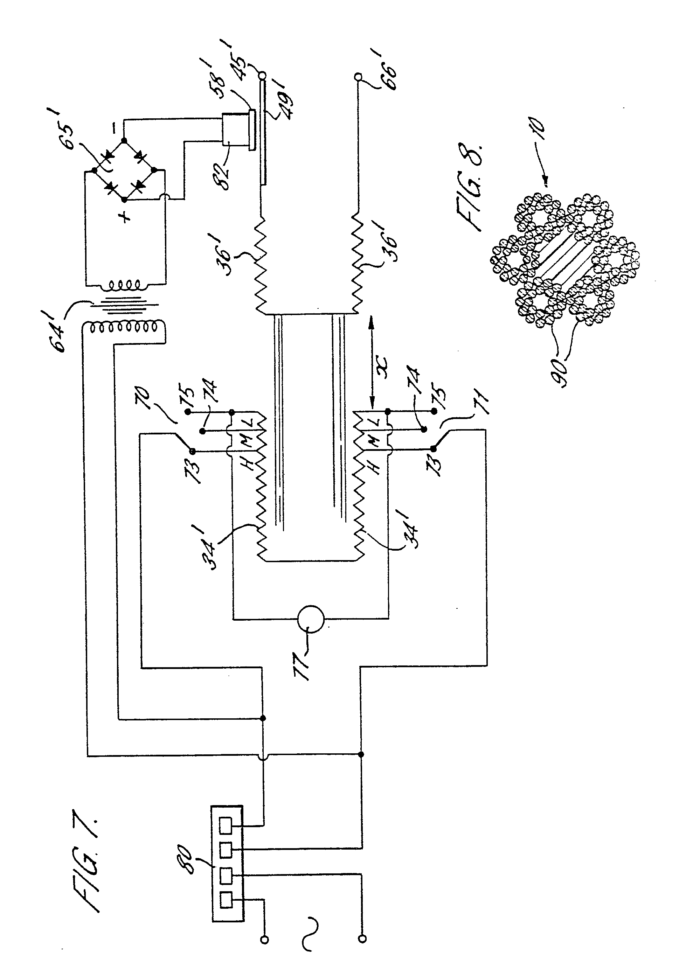

The special form of step down transformer will now be described with reference to Figures 3 to 6 of the accompanying drawings. The transformer comprises a laminated core 30 in the form of a "window" as illustrated schematically in Figure 5. The laminations of the core 30 are clamped together by means of upper and lower pairs of angle members 31 and 32 clamped together by means of distance bolts 33. A primary winding 34 is wound on a former about each vertical arm 35 of the core 30. The primary windings are connected in parallel so as to produce magnetic flux in the core in the same sense. Beneath each primary winding 34 a respective secondary winding 36 is also wound on a former about the respective vertical arm 35. The secondary windings also are connected in parallel in the same sense.

The primary windings are made suitable for connection to a 240 volts mains AC supply and typically comprise a total of 220 tuns of wire capable of carrying up to 15 A without overheating.

The secondary windings 36 are each double wound coils comprising one aluminium and one copper wire wound together in about 8 turns. The current rating for the combined parallel connected secondary coils 36 is about 180 A.

Conveniently, a plurality of tapping points are provided on the primary coils 34 at for example 117 turns, 160 turns and 220 turns, thereby providing selectable step down ratios of 14.6:1, 20:1 and 27.5:1. A control switch (not shown in the drawings) may be provided on the transformer to enable a desired step down ratio to be selected.

On each vertical arm 35 of the core 30, there is positioned a brass screen 37 between the primary winding 34 and the secondary winding 36. This brass screen 37 has a radial slot extending from its outer periphery to the inner periphery surrounding the core arm 35 so as to prevent the screen appearing as a short circuited turn on the transformer. The thickness of the screen 37 is believed to be critical to the performance of the transformer and is between .10'' (2. 54 mm) and .25'' (6. 35 mm) and is preferably about .16'' (approx. 4.1 mm) thick.

One end 38, 39 of each of the secondary windings 36 are connected directly together to a steel bar 40 as shown in Figures 3 and 4. The mild steel bar 14 extends across the top of the transformer and is mounted on strips 41 and 42 of electrically insulating material which are themselves mounted on respective upper angle members 31. The ends 38 and 39 of the secondary windings are welded in a bore 43 provided in one end of the bar 40 to make good electrical connection with the bar 40.

When the transformer illustrated is used to drive current in a wire rope as described above, one end of the wire rope is electrically connected to the bar 40. This connection is made by means of a connector 44 comprising a short length of heavy walled copper tube which has one end flattened and drilled to provide a hole mating with a stud 45 on the bar 40. The connector 44 is itself firmly electrically connected to the bar 40 by bolting on to the stud 45. The other end of the copper tube of the connector 44 is slotted axially as at 46 and the wire rope (not shown in Figures 3 and 4) is pushed into the open end of the tube 44. Good connection is made to the wire rope by clamping the slotted end of the tube 44 firmly around the rope end. To improve the electrical connection to the wire rope, the tube 44 may be filled with solder to ensure electrical connection to substantially all the fibres of the wire rope.

The opposite ends 47, 48 of the secondary windings 36 are taken and electrically connected to a steel rod 49 mounted vertically and parallel to the axes of the windings of the transformer. A lower end of the rod 49 is mounted on an insulator 50 which may be ceramic. The other end 51 of the rod 49 is welded to a mild steel bar 52 which is mounted above the transformer to extend parallel to the upper angle members 31 inwards towards the core 30 of the transformer. The rod 49 is located substantially midway between the upper and lower angle members 31 and 32. Electrical connection is made to the lower end of the rod 49 by welding in a bore 53. The rod 49 is divided along its length at 54 to accommodate a brass slug 55 (best illustrated in Figure 6). As seen in Figure 6, the rod 49 is divided to have abutting faces 56. Each of the abutting faces 56 has a circular recess 57 having a diameter nearly as great as the diameter of the rod 49. The brass slug 55 fills the space provided by the recesses 57 when the ends of the bar 49 are abutted together. In this way, the presence of the brass slug does not detract from the electrical conductivity of the rod 49 but does introduce a relatively high resistance to magnetic flux along the axis of the bar 49.

On each side of the rod 49 where it passes between the upper angle members 31 a sleeve member 58, 59 is mounted bolted to the adjacent angle member 31. The sleeve members 58, 59 extend, as can be seen in Figure 4, vertically over a substantial portion of the length of the rod 49. The sleeves 58, 59 have pole pieces 60, 61 extending from the angle members 31 inwardly to contact the rod 49. The inward ends of the pole pieces 60, 61 are shaped to conform with the rod 49 so that the pole pieces substantially surround the rod. Energising coils 62 and 63 are wound on the sleeves 58 and 59 respectively so that the coils 62 and 63 have a common axis extending transversely of the axis of the rod 49 and perpendicularly to the angle members 31.

The coils 62 and 63 are connected in series, as illustrated in Figure 5 and energised from a small step down transformer 64 mounted on a chassis plate between the lower angle members 32 as shown in Figure 4. The primary winding of the transformer 64 is connected to the mains supply to the unit. A rectifier 65 is connected in series with the secondary winding of the transformer 64 so as to provide halfwave rectification of the secondary current. The transformer 64 is arranged to have a secondary voltage of about 12 V when the primary is connected to mains voltage at about 240 V. The transformer 64 should be rated for a secondary current of 2 A.

Referring again to Figures 3 and 4, the steel bar 52 connected to the upper end of the rod 49 extends parallel to the angle members 31 towards the steel bar 40 to which are connected the ends 38 and 39 of the secondary windings 36 of the main transformer. As explained previously, one end of the wire rope energised by this transformer is connected by means of the connector 44 to the bar 40. The other end of the wire rope is connected in the same fashion to the bar 52. A further connector of the same form as connector 44 is for this purpose bolted, by means of bolt 66 to the bar 52.

When the transformer of Figures 3 to 6 is energised, a current is induced in the secondary coils 36 and flows up the rod 49. The rod 49 is itself under the influence of the magnetic field generated by the coils 62 and 63 energised from the small transformer 64. The rectifier 65 causes the current in the coils 62 and 63 to be substantially d.c. so that the magnetic flux generated thereby which traverses the length of the rod 49 is also d.c. The presence of this d.c. flux modifies the magnetic properties of the rod 49 and is believed significantly to enhance the automatic heat regulation referred to previously.

An alternative transformer is shown in Figure 7, similar elements being indicated by similar reference numerals primed. In this transformer both the primary windings 34' and the secondary windings 36' are wound in series on a core similar to core 30 above. The secondary windings 36' are again wound coaxially with their respective primary windings 34' but are spaced axially therefrom a distance χ. Selector switches 70, 71 give a choice of tapping points 73, 74, 75 on the primary windings 34' for high, medium and low secondary voltages respectively. Reference numeral 77 indicates a neon indicator.

Mains power is supplied to the transformer from input terminals 78, 79 through a kilowatt-hour meter 80. The output from the auxiliary step down transformer 64' is fullwave rectified by a bridge rectifier 65' and is fed to a magnetic device 82 which creates a magnetic field about a steel output rod 49' in a similar fashion to the first transformer.

The ends of the cable 10 are terminated preferably by using compression joints to copper flexible braid which in turn are bolted to the output terminals 45, 66 or 45', 66'.

In a test of soil heating using the alternative transformer 500 ft. (approx. 152 m) of 1 1/4'' (31.75 mm) diameter marine steel rope 10 was buried in soil in a polythene tunnel. The test was carried out in the last week of November and the units used were 201 per week. The temperature of the soil was maintained at 70°F (approx. 21°C) with the outside ambient temperature ranging from 30°F (approx. −1°C) early morning (8.00 a.m.) to 50°F (10°C) at 4.30 p.m. The transformer was of nominal 3 kVA capacity but capable of a 5 kVA load.

It is believed that the combined circuitry of a described transformer with the buried conductor has a self regulating function in automatically controlling current flow, due to some or all of the following principles: 1. Increase of resistance in the steel cable conductor caused by magnetic impedance as the temperature rises, limits current flow. Current flow is automatically adjusted by the initial temperature of the medium surrounding the cable, and in addition the temperature level required is controlled by adjustment of the transformer tappings.

2. Disorganisation of the normal smooth electron flow in the conductor caused by the alternating low-voltage heavy current interferes with the atomic structure to produce a secondary source of heat which augments that available from conventional resistance.

3. Current flow through the medium surrounding the bare conductor cable generates exothermic reactions (e.g. oxidation of organic material in soil) which continue after interruption of current input.

Each of these factors may contribute to economy of running of the heating system.

It is also thought that improved growth and rooting of plants cultivated using a heating arrangement as described may be due to the effects, either separately or combined, of electric currents flowing in the growing medium, either directly between sections of the elongate conductor or induced by magnetic fields produced by current flowing in the conductor, or the magnetic field itself.

The described arrangements of the transformers with predetermined spacings between primary and secondary windings creates heavy magnetic barrier fields between the primary and secondary windings which do not readily collapse. This reduces the effects of the secondary windings on the primary windings, with corresponding relatively high flux leakage. The flux leakage may be sufficiently high to provide sufficient self-inductance of the primary winding to limit current therethrough even when the secondary winding is short-circuited. The maximum current output of the secondary winding is thereby limited which provides a transformer which is difficult to "burn-out".

**Claims**

1. A method of heating a non-gaseous material (12) which comprises the steps of embedding or immersing in the material at least one length of a bare electrical conductor (10) and driving an electric current in the conductor by connecting the conductor to the secondary (36) of an A.C. transformer (16) having primary and secondary windings (24, 36) characterised in that the A.C. transformer has its windings arranged such that the primary and secondary windings are spooled separately and coaxially on a single core, and spaced axially from one another.

2. A method as claimed in claim 1 wherein the conductor (10) is elongate and has a cross-sectional area of at least 5 cm$^2$.

3. A method as claimed in either preceding claim wherein the conductor (10) is steel rope.

4. A method as claimed in any preceding claim wherein the conductor (10) has a surface area per unit length greater than $2\sqrt{A\pi}$, where A is the cross-sectional area.

5. A method as claimed in any preceding claim wherein the voltage across the conductor (10) is less than 20 V.

6. A method as claimed in any of claims 1 to 5 wherein the conductor (10) is arranged such that electric current flows into or from the material (12) to be heated.

7. A method of propagating plants in a growing medium comprising heating the medium by a method as claimed in any one of claims 1 to 6, the length of conductor (10) being embedded in the growing medium or in a base material for the growing medium.

8. A method of space heating for a building or vessel as claimed in any one of claims 1 to 6 wherein the conductor (10) is embedded in a flooring or wall material of the building or vessel.

9. A method of curing concrete comprising heating the wet concrete by a method as claimed in any one of claims 1 to 6 wherein the length of conductor (10) is embedded in the concrete to be cured.

10. A method of heating a liquid as claimed in either claim 1 or claim 2 wherein the conductor is an elongate tubular member, and the liquid is passed through the member to be heated thereby.

11. A method as claimed in claim 10 wherein the member is heated to a predetermined temperature before passing the liquid through the member.

12. A method as claimed in any preceding claim wherein the core (30) is window shaped and laminated, on each of the opposed arms (35) of which is mounted a portion of the primary winding (34) and of the secondary winding (36).

13. A method as claimed in any preceding claim wherein the transformer comprises a rod (49) of a conducting material connected in series with the secondary winding (36), and means for generating a magnetic field transversely of the axis of the rod.

**Revendications**

1. Un procédé pour chauffer une matière non gazeuse (12) suivant lequel on enterre ou on plonge dans la matière au moins une longueur d'un conducteur électrique nu (10) et on fait passer un courant électrique dans le conducteur en connectant le conducteur au secondaire (36) d'un transformateur (16) à courant alternatif ayant des enroulements primaires et secondaires (24, 36), caractérisé en ce que le transformateur à courant alternatif a ses enroulements agencés de telle sorte que les enroulements primaires et secondaires sont bobinés séparément et coaxialement sur un noyau unique, et espacés axialement l'un de l'autre.

2. Procédé suivant la revendication 1 dans lequel le conducteur (10) est allongé et présente une aire en section transversale d'un moins 5 cm².

3. Procédé suivant l'une quelconque des revendications précédentes, dans lequel le conducteur (10) est un filin en acier.

4. Procédé suivant l'une quelconque des revendications précédentes dans lequel le conducteur (10) présente une aire de surface par unité de longueur supérieure à 2√Aπ, où A est l'aire en section transversale.

5. Procédé tel que revendiqué dans l'une quelconque des revendications précédentes dans lequel la tension aux extrémités du conducteur (10) est inférieure à 20 V.

6. Procédé tel que revendiqué dans l'une quelconque des revendications 1 à 5, dans lequel le conducteur (10) est agencé de telle sorte que le courant électrique circule dans la matière (12) à chauffer ou à partir de cette matière.

7. Procédé pour propager des plantes dans un milieu de croissance comprenant le chauffage du milieu au moyen d'un procédé tel que revendiqué dans l'une quelconque des revendications 1 à 6, la longueur de conducteur (10) étant enterrée dans le milieu de croissance ou dans un matériau de base pour le milieu de croissance.

8. Procédé de chauffage de l'espace pour un bâtiment ou un réservoir tel que revendiqué dans l'une quelconque des revendications 1 à 6, dans lequel le conducteur (10) est enterré dans une matière du plancher ou de la paroi du bâtiment du récipient.

9. Procédé pour durcir du béton comprenant le chauffage du béton mouillé au moyen d'un procédé tel que défini suivant l'une quelconque des revendications 1 à 6, dans lequel la longueur de conducteur (10) est noyée dans le béton à durcir.

10. Procédé de chauffage d'un liquide tel que revendiqué dans l'une ou l'autre des revendications 1 ou 2, dans lequel le conducteur est un élément tubulaire allongé, le liquide passant à travers l'élément pour être chauffé par celui-ci.

11. Procédé tel que revendiqué dans la revendication 10, dans lequel l'élément est chauffé jusqu'à une température prédéterminée avant de faire circuler le liquide à travers l'élément.

12. Procédé tel que revendiqué dans l'une quelconque des revendications précédentes, dans lequel le noyau (30) présente une forme en fenêtre et est feuilleté, une partie de l'enroulement primaire (34) et de l'enroulement secondaire (36) étant montée sur chacune des branches opposées (35) de ce noyau.

13. Procédé tel que revendiqué dans l'une quelconque des revendications précédentes, dans lequel la transformateur comprend une tige (49) en une matière conductrice reliée en série avec l'enroulement secondaire (36), et des moyens pour engendrer un champ magnétique transversalement à l'axe de la tige.

**Patentansprüche**

1. Verfahren zum Beheizen eines nicht gasförmigen Materials (12), das die Schritte aufweist, im Material wenigstens einen Abschnitt eines blanken elektrischen Leiters (10) einzubetten oder in das Material einzutauchen und einen elektrischen Strom im Leiter durch Verbinden des Leiters mit der Sekundärwicklung (36) eines Wechselstromtransformators (16) mit Primär- und Sekundärwicklungen (24, 36) zu erzeugen, dadurch gekennzeichnet, daß die Wicklungen des Wechselstromtransformators so angeordnet sind, daß die Primär- und Sekundärwicklungen getrennt und koaxial auf einem einzigen Kern gewickelt sind und in Axialrichtung einen Abstand voneinander aufweisen.

2. Verfahren nach Anspruch 1, bei dem der Leiter (10) länglich ist und eine Querschnittsfläche von wenigstens 5 cm² hat.

3. Verfahren nach einem der beiden vorhergehenden Ansprüche, bei dem der Leiter (10) ein Drahtseil ist.

4. Verfahren nach einem der vorangehenden Ansprüche, bei dem der Leiter (10) eine Oberfläche pro Einheitslänge hat, die größer ist als $2\sqrt{A\pi}$, wobei A die Querschnittsfläche ist.

5. Verfahren nach einem der vorangehenden Ansprüche, bei dem die Spannung über den Leiter (10) weniger als 20 V beträgt.

6. Verfahren nach einem der Ansprüche 1 bis 5, bei dem der Leiter (10) so angeordnet ist, daß elektrischer Strom in das zu beheizende Material (12) oder aus demselben heraus fließt.

7. Verfahren zum Fördern von Pflanzen in einem Anbaumedium, bei dem das Medium nach einem Verfahren nach einem der Ansprüche 1 bis 6 beheizt wird, wobei der Abschnitt des Leiters (10) im Anbaumedium oder einer Unterlage für das Anbaumedium eingebettet ist.

8. Verfahren zur Raumheizung für ein Gebäude oder ein Gefäß nach einem der Ansprüche 1 bis 6, bei dem der Leiter (10) in einem Boden- oder Wandmaterial des Gebäudes oder Gefäßes eingebettet ist.

9. Verfahren zum Härten von Beton, bei dem der nasse Beton nach einem Verfahren nach einem der Ansprüche 1 bis 6 beheizt wird, wobei der Abschnitt des Leiters (10) im zu härtenden Beton eingebettet wird.

10. Verfahren zum Beheizen einer Flüssigkeit nach Anspruch 1 oder 2, bei dem der Leiter ein längliches röhrenförmiges Element ist und bei dem die Flüssigkeit durch das Element hindurchgeleitet wird, um dadurch beheizt zu werden.

11. Verfahren nach Anspruch 10, dadurch gekennzeichnet, daß das Element auf eine vorbestimmte Temperatur aufgeheizt wird, bevor die Flüssigkeit durch das Element geleitet wird.

12. Verfahren nach einem der vorangehenden Ansprüche, bei dem der Kern (30) fensterförmig und geblättert ist, wobei auf jedem der gegenüberstehenden Arme (35) des Fensters ein Teil der Primärwicklung (34) und der Sekundärwicklung (36) befestigt ist.

13. Verfahren nach einem der vorangehenden Ansprüche, bei dem der Transformator eine Stange (49) aus leitendem Material aufweist, die mit der Sekundärwicklung (36) verbunden ist, wobei Einrichtungen zum Erzeugen eines Magnetfelds quer zur Achse der Stange vorgesehen sind.

FIG. 1.

FIG. 2.

FIG. 3.

0 049 608

FIG. 4.

## FIG. 5.

## FIG. 6.

4

FIG. 7.

80

70

73  75
     74

34'  H M L

77

64'

65'
+         -

36'

82  58'
45'
49'

66'

36'

x

34'  H M L

73  74
     75

71

FIG. 8.

90        10

0 049 608